# EUROPEAN PATENT SPECIFICATION

(11) **EP 3 835 914 B1**
(45) Date of publication and mention of the grant of the patent: **27.03.2024**
(21) Application number: 20213596.8
(22) Date of filing: 11.12.2020
(51) Int. Cl.: G05D 23/13, E03C 1/042, F16K 31/524, E03C 1/02

(54) **TEMPERATURE-CONTROLLED MIXING VALVES**
TEMPERATURGESTEUERTE MISCHVENTILE
ROBINETS MELANGEURS A THERMOREGULATEUR

(30) Priority: 11.12.2019 GB 201918208
(43) Date of publication of application: 16.06.2021
(73) Proprietor: Norcros Group (Holdings) Limited, Wilmslow, Cheshire SK9 1BU (GB)
(72) Inventor: CHEFFEY, Jordan, Cheddar, Somerset BS27 3EB (GB); MALEIN, Adam, Cheddar, Somerset BS27 3EB (GB)
(74) Representative: Mewburn Ellis LLP

(56) References cited:
- EP-A1- 3 438 516
- EP-A2- 1 710 480
- WO-A1-03/067133
- US-A- 4 095 610

## Description

This invention has to do with temperature-controlled mixing valves, of the kind widely used in bathroom, sanitary and plumbing installations such as showers, and especially but not exclusively of the kind known as thermostatic mixing valves. Preferred aspects of the invention are a thermostatic shower valve and a shower installation incorporating such a valve.

### BACKGROUND

Bathroom mixing valves are well-known. They operate firstly to combine input flows of hot and cold water in adjustable proportions and secondly to control the rate of the mixed output flow to a user outlet such as a shower head. Thus the valve includes a temperature regulator mechanism for adjusting the relative amounts of hot and cold water, and a flow regulator mechanism to turn flow on and off, and sometimes also to adjust its rate when turned on.

Traditional shower mixers regulate output temperature essentially by varying the relative flow resistances for hot and cold input flows. For a given setting of the regulator, however, the actual output temperature may then then vary depending on e.g. the relative supply pressures, the overall flow rate, the temperature of the hot input, and on other demands on the supplies which might temporarily affect their pressure. Thermostatic mixing valves have addressed this by including a temperature-sensitive servo control. A temperature-sensitive element, usually comprising a body of heat-sensitive material such as expandable wax contained in an expandable chamber, is exposed to the output (mixed) flow. It connects to a movable drive component such as a piston rod, moved by expansion and contraction of the material, to mechanically adjust the relative sizes of the hot and cold flow passages, thereby controlling the output flow temperature in response to direct sensing thereof. Widely-used devices of this kind, comprising the temperature-sensitive element and a flow control unit defining the adjustable flow passages with their adjustment mechanism in an integrated housing, are called thermostatic cartridges and are available as discrete devices which can be built into the valve modules of various kinds of mixer valve such as those used in showers.

In such a device the desired output temperature can be adjusted to a predetermined level by changing preset relative positions of the drive component of the temperature-sensitive element and the mechanical components which control the relative flow aperture sizes. Adjustment is generally by screw thread or cam action, driven by turning an adjustment member of the device around an adjustment axis. Usually this adjusts the mentioned relative positions in the axial direction. The adjustment member has an exposed actuating portion - typically a projecting shaft or spindle end with an end tool form such as a polygon, flat, notch or spline - engaged by an external temperature control (rotatable knob, handle etc.) operated directly by the user. To accommodate the necessary sensor, flow control and adjustment mechanisms, these thermostatic devices are generally elongate in the adjustment axis direction.

Taps and shower valves can be mounted in various ways. Sometimes the entire valve assembly housing and adjacent pipework is exposed externally. Alternatively it may be wholly or partially recessed into a recess or cavity in a wall or in another unit (e.g. in a bathtub, cabinet or the like), often with a cover plate or outer wall portion covering the flow components - such as a mixing valve module and input and output pipes - and with only the controls exposed. Where a cover plate is used, conventionally the external temperature control is a rotatable control projecting outwardly from the cover plate. This outward projection conveniently allows the control knob to accommodate part of the axial length of a thermostatic cartridge, so that a specially deep wall recess is not needed.

EP 1710480A discloses a mixer tap including a drive means that converts rotary movement of a temperature control knob to rotatory movement of a thermostatic mixer element. The rotational plane of movement of the temperature control knob is approximately parallel to the rotational axis of the thermostatic mixer element.

EP 3438516A discloses a faucet connector with valves. Each valve includes a water stoppage mechanism and a driving element. The connector further includes rotatable knobs respectively linked to each driving element for controlling water flow through the valves.

WO 03/067133A discloses a sanitary fitting, e.g. a thermostatic mixer and flow regulating device for the mixer. The flow regulating device having interchangeable connection to the fitting.

### THE INVENTION

Our proposals herein relate to novel dispositions of the components of a mixing valve of the kind described, particularly but not exclusively a thermostatic mixing valve, and particularly but not exclusively shower valves. Particular aspects of our proposals are concerned with improving the spatial economy of the valve assembly where a cover plate is used. The improvements in space packaging can offer advantages for products with low-profile user controls such as push-button flow valves. The invention relates to a temperature-regulated or temperature-controlled mixing valve comprising an input for hot water, an input for cold water, an output for mixed water (hot mixed with cold) and a mixing module or mixing portion for combining flows from the hot and cold inputs for flow to the output. The mixing module/portion includes a temperature regulating mechanism for controlling the respective hot and cold flow rates relative to one another to change or control the water temperature at the output. The temperature regulating mechanism includes an adjuster mechanism having a temperature regulator member, typically in the form of a shaft or spindle, rotatable about a temperature regulator adjustment axis of the mixing valve. The temperature regulator member is coupled to an external temperature control member, such as a rotatable control knob, The control member has a peripheral radially outwardly directed grip surface which is for direct manual actuation by a user to adjust the regulated temperature. In addition to the mixing device/mechanism the valve includes a flow control to regulate (turn on or off, optionally also vary the rate over a range when turned on) flow through the valve to an output. The above components may be provided respectively in a mixing module and a flow control module of the overall valve. The valve may have more than one outlet served from the mixing module.

According to an exemplary arrangement of our proposals, the temperature regulator mechanism is disposed with its temperature regulator adjustment axis lying generally parallel to a plane of movement of the external temperature control member, rather than being orthogonal to that plane as in conventional valves. Thus, where the external temperature control member is rotatable - as is preferred - the adjustment axis may be oriented transversely to the control member rotation axis e.g. within 30°, 20° or 5° of perpendicular to that axis, and desirably perpendicular to it.

Additionally or alternatively, the external temperature control member and the temperature regulator member are coupled to move together by a geared coupling including a first gear rotating with or rotated by the external control member, and a second gear rotating with the temperature regulator member of the adjustment mechanism. Peripheral teeth of the first gear may engage peripheral teeth of the second gear directly. The axes of these gears may be mutually transverse, e.g. within 45°, within 30°, within 20°, within 10° or within 5° of perpendicular, or perpendicular. One or both may be formed with bevel teeth.

Additionally, the mixing valve has a cover plate, wherein at all times including when in use for actuation, an outermost surface of the external temperature control member is substantially flush with, or recessed relative to, an outward surface of the cover plate.

Further optional features of the invention are defined by the claims.

The cover plate may be for covering a cavity (e.g. a wall cavity, or a cavity defined by a casing or housing of the valve, or in which the valve is installed) in which the valve module is contained. The external temperature control member is exposed at an outside of the cover plate, and the disposition and orientation of the temperature control mechanism inside (behind) the cover plate is such that the mentioned adjustment axis is generally parallel to the plate, e.g. within 30°, 20° 10° or 5° of the plane of the plate, or parallel to the plate, as described above.

Installation in a wall cavity is one preferred embodiment. However advantages of the new valve concepts are available in other modes of installation. For example in the context of a shower, thermostatic bar valves are used in which the thermostatic mixer valve is contained in a housing body mounted projecting from a wall or other surface, e.g. with one or more supply or outlet pipes running through one or more supports or legs connecting the housing to the wall or other surface. Typically the housing body is elongate, with the thermostatic cartridge's adjustment axis aligned with its length for a compact construction and a rotational external temperature control member mounted at its end. With a mixing valve embodying any of the aspects herein, the external temperature control member may instead be mounted at a side or front wall of the housing. As in other aspects, the control member is flush or recessed with the housing wall.

The temperature-controlled mixing device such as a thermostatic cartridge is generally and preferably elongate in its axial direction, so that our proposals enable the depth of the mixing module to be reduced relative to adjacent components. The overall depth of the valve module combined with its external temperature control member may then be less than in known mixer valves.

Moreover since the external control member need not accommodate any of the temperature regulation member of the temperature control device, it can be reduced in profile. For example, because the mixing valve is provided with a cover plate, the outward surface of the external control member is able to be flush or substantially flush with, or indeed recessed relative to, an outward surface of the cover plate.

A rotatable external control member is preferred, such as a knob or lever, but alternatively an external member moving linearly, such as a slider, may be used and can be coupled by a simple mechanism to rotate the temperature regulator member of the adjustment mechanism behind. Indeed a member fixedly coupled to the rotatable adjustment member is directly exposed through a cover plate. The skilled person generally makes a choice based on appearance and the ease and necessity of providing sealing.

The mixing valve may comprise the mixing module as a discrete module, e.g. in the form of a block such as a cast block, incorporating the temperature regulator mechanism with the relatively rate-adjustable flow passages for the hot and cold flows, and the rotatable temperature adjuster. The module can comprise a mounting e.g. a shaft or stub, an external rotatable temperature control member, and a coupling, e.g. geared coupling as discussed above, to connect the external control member to rotate the temperature adjustment member. In a preferred embodiment the mixing module does not incorporate a flow control, i.e. any on/off control, i.e. an overall on/off regulator for flow at an output. In such an embodiment the output flow control, such as a valve or tap, and preferably also an input and/or output connector (adapted for connection to a pipe or hose) can be comprised in a discrete flow control module which is connected to the mixing module to complete the flow pathway. There may be one or more than one flow module connected to the mixing module. Each may have a respective output connector.

The mixing module may be releasably connected at the outside of the or each flow module so that it can be disconnected and removed outwardly e.g. for servicing without needing to disturb the connections to the flow module. Flow connections between the mixing and flow modules may be e.g. by means of spigots and sockets, and are preferably directed in an inward-outward direction so that they can be separated by outward withdrawal of the mixing module. For this purpose the mixing module and flow module may have mutually overlapping regions (overlapping as seen looking inward) where these flow connections are made. The overlapping regions may have smaller depth than adjacent regions of the modules. The mixing module may be recessed into a stepped formation of the flow module, and/or recessed in between two flow modules.

### BRIEF DESCRIPTION OF THE DRAWINGS

An embodiment of our proposals and further general principles and options are now described, with reference to the accompanying drawings in which:
Fig. 1 is a perspective view of a mixer valve of the present disclosure in combination with a temperature control member not falling within the scope of the present invention;
Fig. 2 shows a mixing module of the mixer valve, with its control;
Figs. 3 & 4 are respectively a perspective view from behind and a perspective view from in front of the mixer valve, showing a mixing module separated from flow modules;
Fig. 5 is a section at half-depth through the mixer valve, showing the water flow paths and passages;
Fig. 6 is an axial cross-section of the mixing module showing a thermostatic cartridge and its regulator control coupling and
Fig. 7 is an oblique view showing how the mixer valve can be fitted into a box or casing for installation in a recess.

### DETAILED DESCRIPTION

The illustrated mixer valve 1 has a hot water input 7 and a cold water input 8 and can supply two outputs 91, 92 independently with mixed, and temperature-regulated water. The structures defining the inputs and outputs may be conventional tubular structures. The number of outputs is not a limitation. In addition to the mixer valve 1 the mixer fitting 100 includes a flat cover plate 50 e.g. of brass, steel or plastics material, to overlie a cavity or recess in which the valve is fitted.

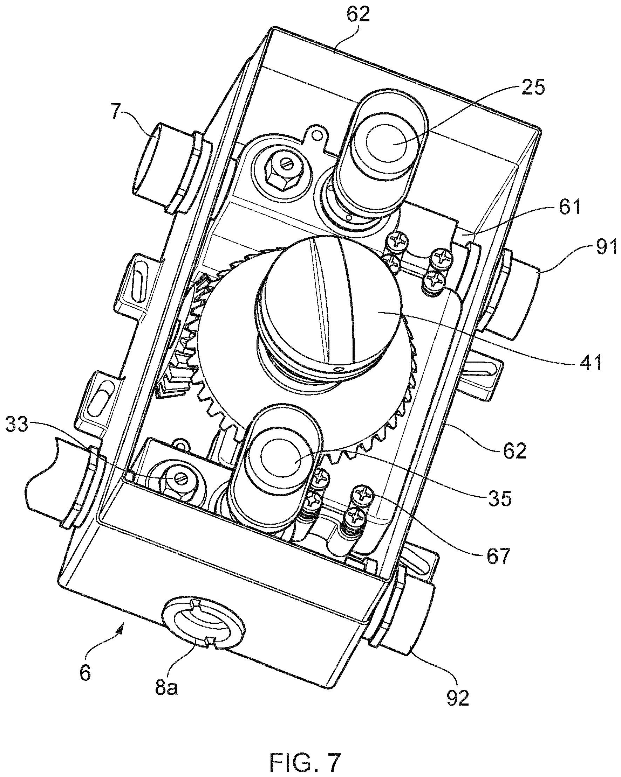

As shown in Fig. 7 the valve 1 may also be contained by a rear/inner box or casing 6, especially when fitted in a masonry recess. The casing can be effective to keep dust and debris away from moving parts; also, when a component such as the mixing module is removed for maintenance, the casing can catch any fall of residual water. The casing 6 has a back wall 61 and side walls 62 which may or may not reach all the way forward to the cover plate 50. In some installations a casing 6 is not needed. The form of a cover plate can be varied and selected according to the situation.

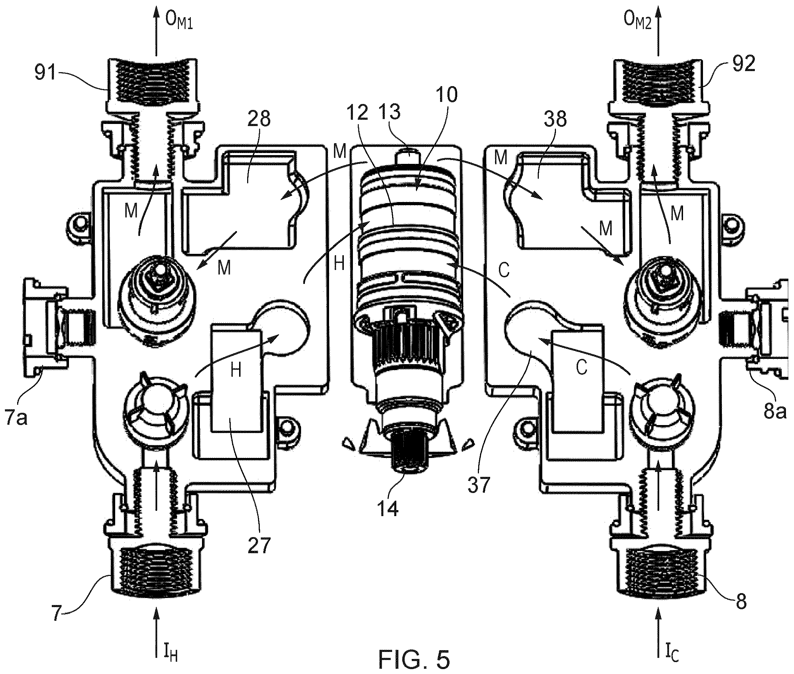

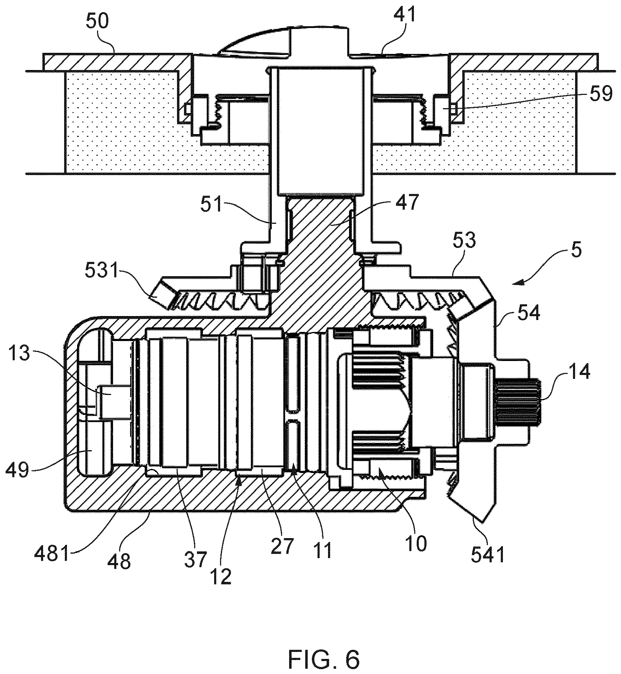

The mixer valve includes first and second flow modules 2,3 including flow control valves 24,34 for the first and second outputs 91,92 respectively. The hot input 7 is on the first module 2 and the cold input 8 on the second flow module 3. Between the flow modules 2,3 is a mixing module 4 providing internal passageways and mechanism by which the hot and cold flows can be mixed and their relative flow rates controlled by an adjustable thermostatic cartridge 10 (see Figs. 5, 6). The temperature-controlled output flow is sent selectively to either or both of the outputs 91,92.

The additional flow connectors 7a,8a are for optional additional output connections, and are blanked off in this embodiment.

With reference to Fig. 5, the assembled valve modules 2,3,4, which may be individual metal castings, provide a first or upstream flow passageway 27 for the input hot water flow I_{H} and a first or upstream flow passageway for the input cold water flow I_{C}, both of these leading from the respective flow module 2,3 into the mixer mixing module 4 to be combined in controlled proportions at the thermostatic cartridge 10. The mixed flow marked "M" emerges at the end of the cartridge 10 (top of Fig. 5) and, depending on which of the flow control valves 24,34 is open (either or both), flows through the respective second or downstream flow passage 28,38 and out through the respective output pipe 91,92 as mixed output flow O_{M1} or O_{M2} e.g. respectively for a fixed shower head and a hand-held shower.

The hot and cold inputs are provided with respective check valves 23,33 to prevent reverse flow: these can be conventional in themselves and are not described further.

A particular feature of the illustrated valve is that the thermostatic cartridge 10 is disposed with its axis of elongation generally parallel to the cover plate 50, and generally in the same plane as, or parallel to, the input and output water flows. In the conventional manner, the thermostatic cartridge 10 is a prefabricated unit received in a cavity 481 defined in the centre portion 48 of the block 40 of the mixing module 4. The block cavity is formed with recesses and sealing lands interfacing with the cartridge casing 11 to provide the necessary input regions of the upstream flow passages 27,37 into the mixer cartridge. Mixed output flow leaves at the end of the cartridge 10 through the outlet chamber 49 (Fig. 6) which communicates with the second or downstream flow passages 28,38 leading to the flow control valves 24,34 of the respective flow modules 2,3.

In a known manner, the thermostatic cartridge 10 comprises a sensor 13 projecting into the outlet chamber 49 to sense the temperature of the output flow. The sensor contains an expandable wax material which on expansion/ contraction drives advancement/retraction of a corresponding drive element inside the cartridge (not shown) which in turn adjusts the position of a flow regulating gate component (shown partly at 12 in Fig. 6) which adjusts the relative sizes of the hot and cold inflow areas and thereby regulates the output temperature by direct feedback. The principle and mechanism, and alternative mechanisms for achieving the same effect, are well-known and no further explanation is needed here.

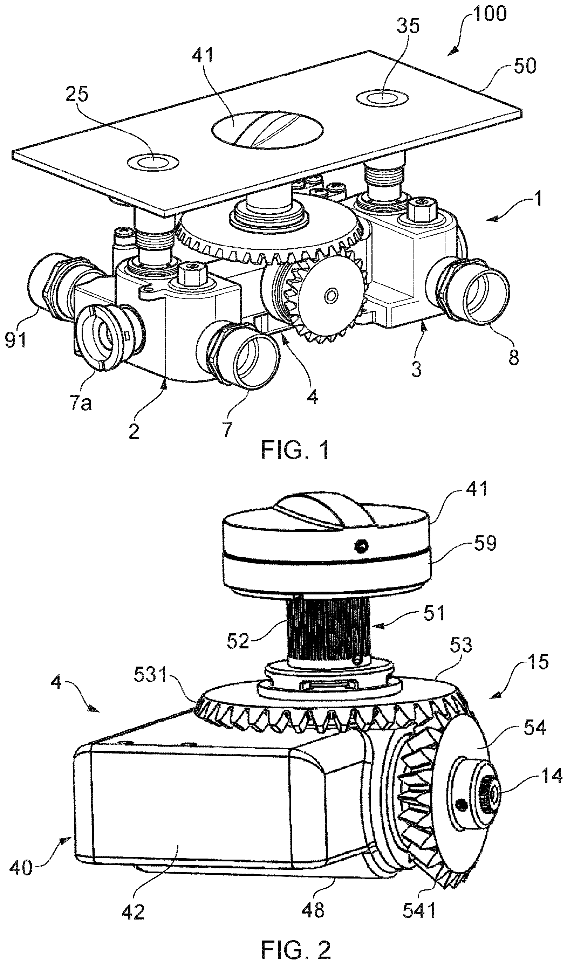

Importantly, the position of the flow-regulating gate 12 relative to the sensed temperature - and hence the output temperature - is determined by a temperature adjuster having a spindle 14 which is rotated to change the position and regulated temperature. Its rotation axis is the elongation axis of the cartridge 10. It has a projecting end with a rotation-drive formation - here, a spline - projecting from the cartridge housing. Since the cartridge 10 in this device is axially parallel with the cover plate, the adjuster spindle 14 is also parallel with the plate and consequently perpendicular to the rotation axis of the temperature control knob 41 operated by the user, which is mounted substantially flush in the cover plate 50 as seen in Figs. 1 and 6. To couple these components a geared regulator coupling 5 is provided as follows.

The temperature control knob 41 is mounted for rotation on a static support stub 47 on the central block of the mixing module. A surrounding shaft sleeve 51 has an external spline to engage and rotate with the control knob 41, and at the bottom keys into a first or driven gear 53 of the coupling, lying closely over the front (outer) surface of the mixing module 4 and having a peripheral set of bevel gear teeth 531 which engage with corresponding teeth 541 of a bevel gear 54, constituting a second or driven gear in the coupling 5, which is coupled to the projecting adjuster spindle 14 by the spline. The sizes of the first and second gears 53,54 can easily be selected to provide a comfortable range of movement of the control knob 41 considering the corresponding range of movement of the temperature adjuster spindle 14.

A rotational control and geared coupling is convenient and easily sealed, but is not the only possible means for adjusting temperature by driving rotation of the adjuster spindle 14 from the front/outside of the cover plate 50. For example a lever, or a sliding toothed rack component, exposed at or on the plate can be used instead.

For convenience the drawing figures show the cover plate 50 horizontal, but it will be understood that in many situations such as in a shower, the control plate is likely to be let into a recess in a vertical wall so that both the control plate and cartridge adjuster axis are in vertical planes. This does not affect the principles of operation; for this reason terminology herein uses "outer" and analogous terms with reference to the position and direction of the cover plate, and "inner" and analogous terms in relation to the position and direction away from the cover plate towards the valve unit.

In this embodiment the flow control valves 24,34 for the outputs 91,92 are button-operated on/off valves, operated by respective push buttons 25,35 fitted flush into the cover plate 50 as seen in Fig. 1. Flow control valves of this kind are well-known, effecting a binary on/off operation with a similar push action for both. It will be seen that in this embodiment, the use of flush-mounted controls for both the flow outputs and for the temperature regulator gives a notably smart and non-intrusive profile to the fitting while, because of the transverse orientation of the thermostatic cartridge 10, the depth of the mixer valve 1 - and the corresponding depth of a recess needed to accommodate it - need be no greater than usual. Also, because the push-button valves 24,34 can adjust in length and the shaft fitting of the temperature regulator 41,51 is also length adjustable, the arrangement offers installation flexibility greater than with conventional thermostatic mixer valves in which the perpendicularly-projecting temperature control knob must project out from the cover plate.

It will be understood however that the flow control valves need not be push-button valves. They may provide for flow rate adjustment in the "on" condition. The control actuators for flow may be of other kinds or forms than those shown.

According to an exemplary arrangement not falling within the scope of the claims, the illustrated temperature control knob 41 has its outermost peripheral edge brought back fully flush with the cover plate, providing a transverse rib on the front face for turning grip. In embodiments of the present disclosure, the temperature control member has a radially outwardly-directed (e.g., peripheral) grip surface. In such a case the extent of axial projection from a cover plate can now have a lower profile. The cover plate has a local recess around the plate opening through which the temperature control projects, reducing the profile of the control relative to the general plane of the cover plate e.g. substantially flush with it at the outward extremity. The temperature control does not project out from the cover plate, while the flow control(s) may or may not project out from the cover plate, according to design preference. The present proposals offer a general flexibility in spatial packaging of the device.

A particular feature of the present embodiment is the nature and disposition of the flow module (in this case, two flow modules) and mixing module of the valve structure relative to one another. The temperature-control cartridge 10 needs to be serviced from time to time, and should therefore preferably be removable from the assembly without disturbing other connections. To this end the mixing module 4 (containing the cartridge 10) overlies the flow modules 2,3 on the outside to complete the flow passageways, and is attached removably to the flow modules.

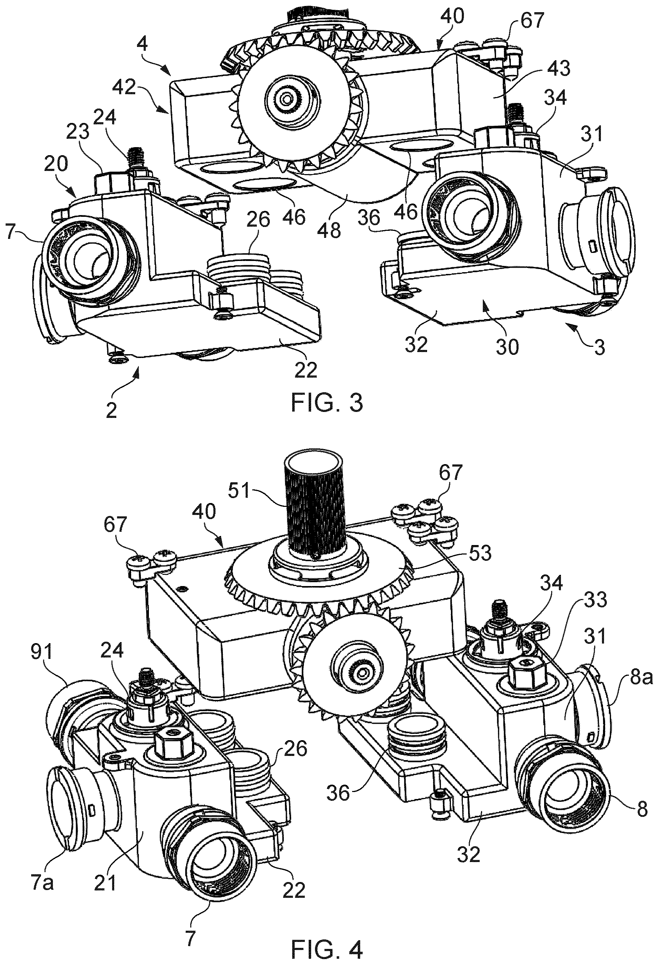

More specifically, the basis block 40 of the mixing module 4 has overlap wing portions 42,43 projecting out to either side of the centre portion 48 housing the cartridge 10. The corresponding portions of the flow passages emerge at inward sockets 46 (see Fig. 3) in the inner or rearward faces of these wing portions 42,43. Correspondingly, the body blocks 20,30 of the flow modules 2,3 have full-depth side portions 21,31 necessary to incorporate the respective main inlets and outlets 7,8,91,92, and the check valve and flow valve mechanisms, and also lateral extensions or overlap portions 22,32 of reduced depths, step-recessed towards the interior or back of the valve, through the front faces of which the corresponding portions of the flow passages emerge through projecting spigots 26,36 (Fig. 3, Fig. 4).

In the assembled valve 1 the outward spigots 26,36 of the flow modules plug sealingly into the inward sockets 46 of the mixing module to complete the flow passages 27,28,37,38. Of course the plug-in connections can be formed either way round, or by other coupling types, but releasability by a direct outward pull is preferred. The wing portions 42,43 of the mixing module 4 are recessed down into the steps formed by the full-depth and reduced-depth portions 21,22;31,32 of the flow modules 2,3. These components are secured in place by threaded fasteners 67, or by other suitable means e.g. clips, accessible or operable from the outer side. In this way the mixing module 4 with the cartridge 10 can be removed for servicing by removing the cover plate 50, releasing the fasteners 67 and withdrawing the mixing module 4 forwardly/outwardly, without disturbing the flow modules 2,3 and their connections into the adjacent pipe work.

As mentioned, the illustrated embodiment describes a device supplying two outlets e.g. for a shower head and a hand shower. The number and nature of the outlets is not restricted, and uses other than showers are apparent, although showers are a preferred field of use especially because it is often desirable in a shower to minimise the projection of controls or fittings from the wall. Accordingly there might be only a single flow module. And in alternative embodiments, e.g. where servicing is not an issue, the arrangement may combine the flow passages, mixing passages and their controls and adjusters into a single valve module or cast body.

## Claims

1. A temperature-controlled mixing valve for installation within a cavity, the temperature-controlled mixing valve comprising an input (7) for hot water, an input (8) for cold water, an output (91,92) for mixed water, a flow control (24,34) to regulate flow rate through the valve, a mixing module (4) for combining flows from the hot and cold inputs for flow to the output, and a cover plate (50) for covering the cavity;
the mixing module comprising a temperature regulating mechanism (10) for controlling the respective hot and cold flow rates relative to one another to change or control the water temperature at the output;
the temperature regulating mechanism comprising an adjuster mechanism having a temperature regulator member (14) coupled to an external temperature control member (41) having a peripheral radially outwardly directed grip surface for actuation by a user to adjust the regulated temperature, and wherein
(i) the temperature regulator mechanism (10) has a temperature regulator adjustment axis and is disposed with its temperature regulator adjustment axis lying parallel to a plane of movement of the external temperature control member (41), and/or
(ii) the external temperature control member (41) and the temperature regulator member are coupled to move together by means of a geared coupling (5) including a first gear (53) connected to rotate with or be rotated by the external temperature control member (41), and a second gear (54) connected to rotate with the temperature regulator member (14) of the adjustment mechanism;
**characterized in that**, at all times including when in use for actuation, an outermost surface of the external temperature control member (41) is substantially flush with, or recessed relative to, an outward surface of the cover plate (50).

2. A valve according to claim 1, wherein the external temperature control member (41) is substantially flush with the outward surface of the cover plate (50).

3. A valve according to claim 1 or claim 2, wherein the cover plate (50) comprises an opening through which the external temperature control member (41) projects, the opening being recessed to reduce the axial profile of the external temperature control member (41) relative to the plane of the cover plate (50).

4. A valve according to claim 1 or claim 2, wherein the flow control comprises respective push-button flow valves (24,34) for hot water and cold water, wherein the respective push-button flow valves (24,34) are operated by respective buttons (25, 35) which are fitted flush into the cover plate (50).

5. A valve according to any one of claims 1 to 4, in which the external temperature control member (41) is rotatable.

6. A valve according to claim 5 in which the temperature regulator adjustment axis of the temperature regulator mechanism (10) is oriented perpendicular, or within 20° or within 5° of perpendicular, to a rotation axis of the external temperature control member (41).

7. A valve according to any one of the preceding claims having feature (ii) of claim 1 and in which peripheral teeth (531) of the first gear (53) engage peripheral teeth (541) of the second gear (54) directly, and the axes of the first and second gears are perpendicular, or within 20° or within 5° of perpendicular.

8. A valve according to any one of the preceding claims in which the temperature regulator member (14) of the temperature regulating mechanism (10) comprises a shaft or spindle rotatable about the temperature regulator adjustment axis.

9. A valve according to any one of the preceding claims, the external temperature control member (41) being exposed at an outside of the cover plate, and the temperature regulating mechanism (10) being disposed and oriented behind the cover plate (50) such that the temperature regulator adjustment axis is parallel to a plane of the cover plate, or within 20° or within 5° of parallel to the plane of the cover plate.

10. A valve according to any one of the preceding claims in which the mixing module (4) is a discrete module in the form of a block incorporating the temperature regulator mechanism (10), the flow control (24,34) being comprised in one or more discrete flow modules (2,3) connected to the mixing module (4).

11. A valve according to claim 10 in which the mixing module (4) is releasably connected at the outside of the one or more discrete flow modules (2,3) for disconnection and removal outwardly, flow connections (26,36,46) between the mixing module and the one or more discrete flow modules being directed in an inward-outward direction so that they can be separated by outward withdrawal of the mixing module.

12. A valve according to claim 11 in which the mixing module (4) and each of the one or more discrete flow modules (2,3) have mutually overlapping regions (22,32,42,43), as viewed looking inward, where the flow connections are made, the mixing module being recessed into a stepped formation of the flow module, and/or recessed in between two flow modules.

13. A valve according to any one of the preceding claims in which the temperature regulating mechanism (10) comprises a thermostatic cartridge.

14. A valve according to any one of the preceding claims which is a thermostatic shower valve.

15. A shower installation incorporating a valve according to any one of claims 1 to 14.

## Patentansprüche

1. Temperaturgesteuertes Mischventil zum Einbau innerhalb eines Hohlraums, wobei das temperaturgesteuerte Mischventil einen Eingang (7) für Warmwasser, einen Eingang (8) für Kaltwasser, einen Ausgang (91, 92) für gemischtes Wasser, eine Strömungssteuerung (24, 34) zum Regeln der Strömungsrate durch das Ventil, ein Mischmodul (4) zum Vereinigen von Strömen vom Warmeingang und Kalteingang zum Strömen zum Ausgang und eine Abdeckplatte (50) zum Abdecken des Hohlraums umfasst;
wobei das Mischmodul einen Temperaturregulierungsmechanismus (10) zum Steuern der Warm- bzw. Kalt-Strömungsrate relativ zueinander umfasst, um die Wassertemperatur am Ausgang zu ändern oder zu steuern;
wobei der Temperaturregulierungsmechanismus einen Einstellmechanismus mit einem Temperaturreglerelement (14) umfasst, das mit einem externen Temperatursteuerelement (41) gekoppelt ist, das eine radial nach außen gerichtete Greifumfangsoberfläche zur Betätigung durch einen Benutzer aufweist, um die geregelte Temperatur einzustellen, und wobei
(i) der Temperaturregulierungsmechanismus (10) eine Temperaturreglereinstellachse aufweist und mit seiner Temperaturreglereinstellachse parallel zu einer Bewegungsebene des externen Temperatursteuerelements (41) angeordnet ist, und/oder
(ii) das externe Temperatursteuerelement (41) und das Temperaturreglerelement gekoppelt sind, um sich zusammen zu bewegen,
und zwar mittels einer Zahnkupplung (5), die ein erstes Zahnrad (53), das verbunden ist, um mit dem externen Temperatursteuerelement (41) zu rotieren oder von diesem rotiert zu werden, und ein zweites Zahnrad (54), das verbunden ist, um mit dem Temperaturreglerelement (14) des Einstellmechanismus zu rotieren, umfasst;
**dadurch gekennzeichnet, dass** eine äußerste Oberfläche des externen Temperatursteuerelements (41) jederzeit, auch während der Verwendung zur Betätigung, im Wesentlichen mit einer nach außen gerichteten Oberfläche der Abdeckplatte (50) bündig ist oder in Bezug darauf vertieft ist.

2. Ventil nach Anspruch 1, wobei das externe Temperatursteuerelement (41) im Wesentlichen mit der nach außen gerichteten Oberfläche der Abdeckplatte (50) bündig ist.

3. Ventil nach Anspruch 1 oder Anspruch 2, wobei die Abdeckplatte (50) eine Öffnung umfasst, durch die das externe Temperatursteuerelement (41) vorsteht, wobei die Öffnung zurückgesetzt ist, um das axiale Profil des externen Temperatursteuerelements (41) relativ zur Ebene der Abdeckplatte (50) zu verringern.

4. Ventil nach Anspruch 1 oder Anspruch 2, wobei die Strömungssteuerung entsprechende Druckknopf-Durchflussventile (24, 34) für Warmwasser und Kaltwasser umfasst, wobei die entsprechenden Druckknopf-Durchflussventile (24, 34) durch entsprechende Knöpfe (25, 35) betätigt werden, die bündig in die Abdeckplatte (50) eingepasst sind.

5. Ventil nach einem der Ansprüche 1 bis 4, wobei das externe Temperatursteuerelement (41) rotierbar ist.

6. Ventil nach Anspruch 5, wobei die Temperaturreglereinstellachse des Temperaturregulierungsmechanismus (10) orthogonal oder innerhalb von 20° oder innerhalb von 5° zur Orthogonalen zu einer Rotationsachse des externen Temperatursteuerelements (41) angeordnet ist.

7. Ventil nach einem der vorangegangenen Ansprüche mit Merkmal (ii) von Anspruch 1 und wobei Umfangszähne (531) des ersten Zahnrads (53) direkt in Umfangszähne (541) des zweiten Zahnrads (54) eingreifen und die Achse des ersten und des zweiten Zahnrads orthogonal oder innerhalb von 20° oder innerhalb von 5° zur Orthogonalen sind.

8. Ventil nach einem der vorangegangenen Ansprüche, wobei das Temperaturreglerelement (14) des Temperaturregulierungsmechanismus (10) eine Welle oder Spindel umfasst, die um die Temperaturreglereinstellachse rotierbar ist.

9. Ventil nach einem der vorangegangenen Ansprüche, wobei das externe Temperatursteuerelement (41) an einer Außenseite der Abdeckplatte freiliegt und der Temperaturregulierungsmechanismus (10) hinter der Abdeckplatte (50) angeordnet und so ausgerichtet ist, dass die Temperaturreglereinstellachse parallel zu einer Ebene der Abdeckplatte oder innerhalb von 20° oder innerhalb von 5° zur Parallelen zur Achse der Abdeckplatte ist.

10. Ventil nach einem der vorangegangenen Ansprüche, wobei das Mischmodul (4) ein getrenntes Modul in Form eines Blocks ist, der den Temperaturregulierungsmechanismus (10) umfasst, wobei die Strömungssteuerung (24, 34) in einem oder mehreren getrennten Strömungsmodulen (2, 3) enthalten ist, die mit dem Mischmodul (4) verbunden sind.

11. Ventil nach Anspruch 10, wobei das Mischmodul (4) zur Trennung und Entfernung nach außen lösbar mit einer Außenseite des einen oder der mehreren getrennten Strömungsmodule (2,3) verbunden ist, wobei Strömungsverbindungen (26, 36, 46) zwischen dem Mischmodul und dem einen oder mehreren getrennten Strömungsmodulen in einer Innen-Außen-Richtung ausgerichtet sind, sodass sie getrennt werden können, indem das Mischmodul nach außen entfernt wird.

12. Ventil nach Anspruch 11, wobei das Mischmodul (4) und jedes der einen oder mehreren getrennten Strömungsmodule (2, 3) nach innen gesehen gegenseitig überlappende Regionen (22, 32, 42, 43) aufweisen, wo die Strömungsverbindungen ausgebildet sind, wobei das Mischmodul in einer stufenförmigen Ausbildung des Strömungsmoduls vertieft ist und/oder zwischen zwei Strömungsmodulen vertieft ist.

13. Ventil nach einem der vorangegangenen Ansprüche, wobei der Temperaturregulierungsmechanismus (10) eine Thermostatkartusche umfasst.

14. Ventil nach einem der vorangegangenen Ansprüche, das ein Thermostat-Duschventil ist.

15. Duschinstallation, die ein Ventil nach einem der Ansprüche 1 bis 14 umfasst.

## Revendications

1. Vanne de mélange commandée en température pour une installation à l'intérieur d'une cavité, le vanne de mélange commandée en température comprenant une entrée (7) pour l'eau chaude, une entrée (8) pour l'eau froide, une sortie (91, 92) pour l'eau mixte, une commande d'écoulement (24, 34) pour réguler le débit d'écoulement à travers la vanne, un module de mélange (4) pour combiner les écoulements provenant des entrées chaude et froide pour un écoulement vers la sortie, et une plaque de recouvrement (50) pour recouvrir la cavité ;
le module de mélange comprenant un mécanisme de régulation de température (10) pour commander les débits d'écoulement d'eau chaude et froide respectifs l'un par rapport à l'autre afin de modifier ou commander la température de l'eau au niveau de la sortie ;
le mécanisme de régulation de température comprenant un mécanisme d'ajustement présentant un élément régulateur de température (14) couplé à un élément de commande de température externe (41) présentant une surface de préhension périphérique dirigée radialement vers l'extérieur pour un actionnement par un utilisateur afin d'ajuster la température régulée, et dans laquelle
(i) le mécanisme régulateur de température (10) présente un axe d'ajustement de régulateur de température et est disposé avec son axe d'ajustement de régulation de température parallèle à un plan de déplacement de l'élément de commande de température externe (41), et/ou
(ii) l'élément de commande de température externe (41) et l'élément régulateur de température sont couplés pour se déplacer ensemble au moyen d'un raccord à engrenages (5) incluant un premier engrenage (53) connecté pour tourner avec ou être mis en rotation par l'élément de commande de température externe (41), et un second engrenage (54) connecté pour tourner avec l'élément régulateur de température (14) du mécanisme d'ajustement ;
**caractérisée en ce qu'**à tout moment, y compris lorsqu'il est utilisé pour un actionnement, une surface la plus extérieure de l'élément de commande de température externe (41) affleure sensiblement ou est en retrait par rapport à une surface extérieure de la plaque de recouvrement (50).

2. Vanne selon la revendication 1, dans laquelle l'élément de commande de température externe (41) affleure sensiblement la surface extérieure de la plaque de recouvrement (50).

3. Vanne selon la revendication 1 ou la revendication 2, dans laquelle la plaque de recouvrement (50) comprend une ouverture à travers laquelle l'élément de commande de température externe (41) fait saillie, l'ouverture étant évidée pour réduire le profil axial de l'élément de commande de température externe (41) par rapport au plan de la plaque de recouvrement (50).

4. Vanne selon la revendication 1 ou la revendication 2, dans laquelle la commande d'écoulement comprend des vannes d'écoulement à bouton-poussoir respectives (24, 34) pour l'eau chaude et l'eau froide, dans laquelle les vannes d'écoulement à bouton-poussoir respectives (24, 34) sont actionnées par des boutons respectifs (25, 35) qui sont montés en affleurement dans la plaque de recouvrement (50).

5. Vanne selon l'une quelconque des revendications 1 à 4, dans laquelle l'élément de commande de température externe (41) est rotatif.

6. Vanne selon la revendication 5, dans laquelle l'axe d'ajustement de régulateur de température du mécanisme régulateur de température (10) est orienté perpendiculairement, ou à moins de 20° ou à moins de 5° de la perpendiculaire, par rapport à un axe de rotation de l'élément de commande de température externe (41).

7. Vanne selon l'une quelconque des revendications précédentes présentant la caractéristique (ii) de la revendication 1 et dans laquelle les dents périphériques (531) du premier engrenage (53) viennent en prise directement dans les dents périphériques (541) du second engrenage (54), et les axes des premier et second engrenages sont perpendiculaires, ou à moins de 20° ou à moins de 5° de la perpendiculaire.

8. Vanne selon l'une quelconque des revendications précédentes, dans laquelle l'élément régulateur de température (14) du mécanisme de régulation de température (10) comprend un arbre ou une broche pouvant tourner autour de l'axe d'ajustement de régulateur de température.

9. Vanne selon l'une quelconque des revendications précédentes, l'élément de commande de température externe (41) étant exposé à l'extérieur de la plaque de recouvrement, et le mécanisme de régulation de température (10) étant disposé et orienté derrière la plaque de recouvrement (50) de telle sorte que l'axe d'ajustement de régulateur de température est parallèle à un plan de la plaque de recouvrement, ou à moins de 20° ou à moins de 5° de parallélisme par rapport au plan de la plaque de recouvrement.

10. Vanne selon l'une quelconque des revendications précédentes, dans laquelle le module de mélange (4) est un module discret sous la forme d'un bloc incorporant le mécanisme régulateur de température (10), la commande d'écoulement (24, 34) étant comprise dans un ou plusieurs modules d'écoulement discrets (2, 3) connectés au module de mélange (4).

11. Vanne selon la revendication 10, dans laquelle le module de mélange (4) est connecté de manière libérable au niveau de l'extérieur des un ou plusieurs modules d'écoulement discrets (2, 3) pour une déconnexion et un retrait vers l'extérieur, des connexions d'écoulement (26, 36, 46) entre le module de mélange et les un ou plusieurs modules d'écoulement discrets étant dans une direction vers l'intérieur-vers l'extérieur de sorte qu'elles peuvent être séparées par un retrait vers l'extérieur du module de mélange.

12. Vanne selon la revendication 11, dans laquelle le module de mélange (4) et chacun des un ou plusieurs modules d'écoulement discrets (2, 3) présentent des régions se chevauchant mutuellement (22, 32, 42, 43), vues en regardant vers l'intérieur, où les connexions d'écoulement sont réalisées, le module de mélange étant en retrait dans une formation étagée du module d'écoulement, et/ou en retrait entre deux modules d'écoulement.

13. Vanne selon l'une quelconque des revendications précédentes, dans laquelle le mécanisme de régulation de température (10) comprend une cartouche thermostatique.

14. Vanne selon l'une quelconque des revendications précédentes, qui est un robinet de douche thermostatique.

15. Installation de douche incorporant une vanne selon l'une quelconque des revendications 1 à 14.
